# EUROPÄISCHE PATENTSCHRIFT

(11) **EP 3 507 891 B1**
(45) Veröffentlichungstag und Bekanntmachung des Hinweises auf die Patenterteilung: **15.11.2023**
(21) Anmeldenummer: 17758886.0
(22) Anmeldetag: 31.08.2017
(51) Int. Cl.: H02K 11/225, G01B 7/30

(54) **ELEKTRISCHE MASCHINE**
ELECTRICAL MACHINE
MACHINE ÉLECTRIQUE

(30) Priorität: 01.09.2016 DE 102016216480
(43) Veröffentlichungstag der Anmeldung: 10.07.2019
(73) Patentinhaber: Valeo eAutomotive Germany GmbH, 91056 Erlangen (DE)
(72) Erfinder: KUHN, Martin, 97708 Roth (DE); ZAMZOW, Silvio, 98660 Beinerstadt (DE)
(74) Vertreter: Valeo Powertrain Systems
(86) Internationale Anmeldenummer: PCT/EP2017/071905
(87) Internationale Veröffentlichungsnummer: WO 2018/041969

(56) Entgegenhaltungen:
- EP-A2- 0 954 092
- EP-A2- 2 546 963
- DE-A1-102012 220 629
- DE-U1- 9 401 565
- JP-A- 2004 015 889

## Beschreibung

Die Erfindung betrifft eine elektrische Maschine.

Eine elektrische Maschine, wie beispielsweise ein Elektromotor oder ein Generator, umfasst im Allgemeinen einen mit einer Feldwicklung versehenen Stator, in welchem ein Rotor mit einem oder mehreren Permanentmagneten um die Rotorachse drehbar gelagert ist. Der Rotor ist mit einer Welle verbunden, wodurch eine Drehmomentübertragung zwischen der Welle und dem Rotor erfolgt.

Um die Drehzahl oder die Drehposition der Welle einer elektrischen Maschine zu erfassen, wird üblicherweise ein Resolver eingesetzt. Der Resolver umfasst einen Resolver-Rotor und einen Resolver-Stator. Der Resolver-Rotor ist üblicherweise versetzt zu dem Rotor der elektrischen Maschine auf der Welle angeordnet. Die Welle stellt somit das Verbindungsglied zwischen dem Rotor der elektrischen Maschine und dem Resolver-Rotor dar.

Aus der JP 2004 015889 A ist ein Schrittmotor bekannt, umfassend eine Welle, einen daran angeordneten Motor-Rotor, sowie einen Resolver mit einem Resolver-Rotor und einem Resolver-Stator.

EP 2 546 963 A2 offenbart eine elektrische Maschine, umfassend eine rotierbare, sich in einer Längsrichtung erstreckende Welle, einen auf der Welle drehfest angeordneten Rotor, sowie einen Resolver, der zum Erfassen der Winkellage des Rotors einen Resolver-Rotor und einen Resolver-Stator umfasst.

DE 10 2012 220 629 A offenbart eine elektrische Maschine mit einer Welle, mit einer drehfest an der Welle befestigten Rotorträgervorrichtung und mit einem an einem Rotorträgerelement der Rotorträgervorrichtung angeordneten Rotor. Ein Resolver-Rotor ist in einem Blechring der Rotorträgervorrichtung angeordnet.

EP 0 954 092 A2 beschreibt einen Elektromotor, bei dem der Rotor eines Resolvers direkt drehfest am Rotor des Elektromotors befestigt ist.

Die Übertragung von Momenten zwischen einem Rotor und einer Welle erfolgt aktuell üblicherweise kraftschlüssig über einen Querpressverband zwischen den beiden Komponenten der elektrischen Maschine. Problematisch bei einem solchen Querpressverband ist jedoch die durch die Presspassung in den Rotor eingeprägte mechanische Spannung. Weiter wird im Betrieb der elektrischen Maschine durch die bei der Drehung der Welle hervorgerufene Fliehkraft eine zusätzliche Spannungskomponente erzeugt.

Zwar reduziert sich die durch die Presspassung eingeprägte mechanische Spannung durch die Fliehkraft im Betrieb der elektrischen Maschine, also bei Rotation der Welle. Aufgrund der Kombination der beiden Spannungskomponenten erhöht sich jedoch die Materialspannung insgesamt bis hin zur zulässigen Material-Dehngrenze, die als Limitierung der maximal möglichen Drehzahl gilt.

Eine Alternative zu einer kraftschlüssigen Befestigung liegt in einer formschlüssigen Verbindung des Rotors der elektrischen Maschine und der Welle. Auch eine Kombination von Formschluss und Kraftschluss zur Befestigung des Rotors auf der Welle ist möglich. Zu den formschlüssigen Verbindungen zählen beispielsweise Abflachungen, Nuten, oder auch polygone Verzahnungen. Eine formschlüssige Befestigung stellt jedoch aufgrund der hohen Fertigungskosten und der möglichen Verschiebung der relativen Rotorpositionen des Resolver-Rotors gegenüber dem Rotor der elektrischen Maschine eine konstruktive Herausforderung dar. Ein Verdrehfehler des Resolver-Rotors zum Rotor der elektrischen Maschine kann zu einer falschen Bestromung der elektrischen Maschine und damit im ungünstigsten Fall zu deren Ausfall führen.

Entsprechend muss bei der Auslegung der maximalen Drehzahl aktuell die jeweilige Vorbelastung bzw. die "Vorschädigung" des Spannungsfeldes immer mit berücksichtigt werden. Reduziert man die Drehzahl, so reduziert man auch die Vorspannung des Rotors der elektrischen Maschine. Gleichzeitig muss bei einer solchen Reduzierung ein mögliches Verdrehen des Motor-Rotors bewertet werden. Formschlüssige Verbindungen nehmen hierbei eine leichte Verdrehung des Motor-Rotors in Kauf, was dann mit engen Toleranzfeldern und entsprechend hohen Fertigungskosten beim Lieferanten zu minimieren versucht wird.

Der Erfindung liegt als eine Aufgabe zugrunde, eine Möglichkeit anzugeben, mittels welcher eine korrekte Erfassung der Position eines Motor-Rotors einer elektrischen Maschine erfolgen kann.

Diese Aufgabe der Erfindung wird erfindungsgemäß gelöst durch eine elektrische Maschine mit den Merkmalen des Anspruchs 1.

Die erfindungsgemäße elektrische Maschine umfasst eine rotierbare, sich in einer Längsrichtung erstreckende Welle, einen auf der Welle drehfest angeordneten Rotor, sowie einen Resolver, der zum Erfassen der Winkellage des Rotors einen Resolver-Rotor und einen Resolver-Stator umfasst, wobei der Resolver-Rotor dem auf der Welle angeordneten Rotor drehfest angebunden ist, wobei der Resolver-Rotor in Längsrichtung vom Rotor beabstandet an diesem Rotor mittels eines Adapters in Form von parallel zur Längsrichtung der Welle ausgerichteten Stegen angebunden ist.

Die Erfindung strebt eine Verringerung der Pressspannung des kraftschlüssigen Querpressverbandes zwischen dem Rotor und der Welle bei maximaler Drehzahl an. Dies kann grundsätzlich erreicht werden, wenn die Momentenübertragung zwischen dem Rotor der elektrischen Maschine und der Welle zumindest teilweise über deren formschlüssige Anbindung aneinander erfolgt.

Derartige Momentenübertragungen lassen sich beispielsweise durch Wellen mit polygonen Außenkonturen erreichen. Diese sind nach heutigem Technologiestand über Drehtechnologien nahezu kostenneutral gegenüber Wellen mit einem kreisrunden Querschnitt herstellbar. Die Momentenübertragung wird bei einer entsprechend ausgebildeten Welle teilweise über die Verpressung und teilweise über den Formschluss zwischen dem Rotor der elektrischen Maschine und der Welle sichergestellt.

Allerdings führt auch beim Einsatz einer derart ausgestalteten Welle die Aufweitung des Rotors der elektrischen Maschine bei hohen Drehzahlen zu einer Winkelverdrehung. Diese relative Verdrehung des Motor-Rotors gegenüber der Welle kann mit dem gängigen Systemaufbau nicht vom Resolver detektiert werden.

Unter Berücksichtigung der vorbeschriebenen Problematik erkennt die Erfindung in einem dritten Schritt, dass auf Verdrehfehlern basierende fehlerhafte Messungen bzw. Bestimmungen der Rotor-Position einer elektrischen Maschine auch bei hohen Drehzahlen dann vermieden werden können, wenn der Rotor der elektrischen Maschine und der Resolver-Rotor nicht relativ zueinander verdrehbar sind. Eine solche Relativbewegung, die eine verfälschte Positionsbestimmung des Rotors der elektrischen Maschine bedingen kann, wird dadurch unterbunden, dass die Position des Motor-Rotors mit der Position des Resolver-Rotors gekoppelt ist. Hierzu ist der Resolver-Rotor dem auf der Welle angeordneten Rotor der elektrischen Maschine drehfest angebunden.

Auf diese Weise erfolgt die Positionsmessung des Motor-Rotors auch bei einer Winkelverdrehung des Motor-Rotors auf der Welle korrekt. Kleine Winkelabweichungen durch reduzierte Passungen und gegebenenfalls durch polygone Konturen können ausgeglichen werden.

Von Vorteil ist es, wenn die Welle derart ausgebildet ist, dass eine formschlüssige Verbindung zwischen dem Rotor und der Welle durch eine Verzahnung, durch Abflachungen oder Nuten zustande kommt. Besonders bevorzugt ist die Welle mit einer polygonen Außenkontur ausgebildet. Über diese polygone Außenkontur wird der Formschluss zwischen dem Rotor der elektrischen Maschine und der Welle sichergestellt. Ein polygoner Querschnitt ist im Hinblick auf die Fertigungskosten wettbewerbsfähig zu kreisrunden Querschnitten fertigbar.

Gemäß der Erfindung ist der Resolver-Rotor in Längsrichtung vom Rotor der elektrischen Maschine beabstandet an diesen angebunden. Die Beabstandung wird durch einen Adapter erreicht. Als Adapter sind Stege einsetzbar, die jeweils parallel zur Längsrichtung der Welle ausgerichtet sind und den Rotor der elektrischen Maschine und den Resolver-Rotor drehfest miteinander verbinden.

Der Resolver-Stator ist zweckmäßigerweise gehäusefest. Mit anderen Worten ist der Resolver-Stator drehfest an einem Gehäuse befestigt. Die Befestigung erfolgt zweckmäßigerweise an dem Gehäuse der elektrischen Maschine. Der Resolver-Rotor und damit die Welle besitzen gegenüber dem Resolver-Stator eine definierte Drehposition.

Bevorzugt umfasst die elektrische Maschine einen gehäusefesten Stator, wobei der Rotor der elektrischen Maschine relativ zu dem Stator rotierbar ist. Der Resolver-Stator ist vorzugsweise ortsfest bezüglich des gehäusefesten Stators der elektrischen Maschine angeordnet.

Der Rotor der elektrischen Maschine ist insbesondere als ein Blechpaket mit einer Mehrzahl von in Längsrichtung geschichteter Bleche ausgebildet. Die Bleche werden zweckmäßigerweise einzeln hergestellt, axial gestapelt und anschließend zur Bildung eines Blechpakets miteinander verbunden. Von Vorteil ist es, wenn die Bleche miteinander zu dem Blechpaket verklebt oder verschweißt sind.

Grundsätzlich werden elektrische Maschinen in rotierende und ruhende elektrische Maschinen unterteilt. Zu den rotierenden elektrischen Maschinen oder Rotationsmaschinen zählt man Elektromotoren, die ihrerseits in Gleichstrom-, Wechselstrom- und Drehstrommotoren unterteilt werden, sowie Generatoren. Transformatoren hingegen gehören zur Gruppe der ruhenden elektrischen Maschinen. Besonders bevorzugt ist die elektrische Maschine als ein Elektromotor ausgebildet.

Im Folgenden werden Ausführungsbeispiele der Erfindung anhand einer Zeichnung näher erläutert. Dabei zeigen:
- FIG 1: einen Ausschnitt einer elektrischen Maschine mit einem auf einer Welle befestigten Rotor und einem an dem Rotor drehfest angeordneten Resolver-Rotor, sowie
- FIG 2: den Rotor gemäß FIG 1 in einem Querschnitt.

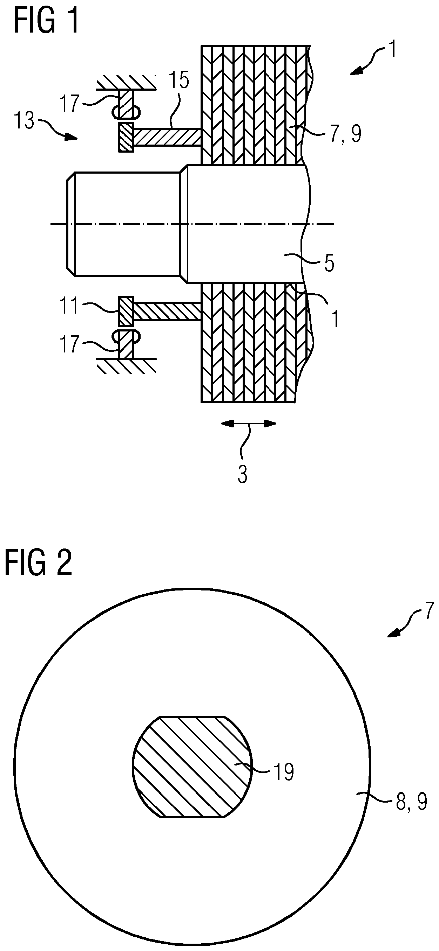

In FIG 1 ist ein Ausschnitt einer als Elektromotor ausgebildeten elektrischen Maschine 1 gezeigt. Die elektrische Maschine umfasst eine sich in einer Längsrichtung 3 erstreckende Welle 5, auf welcher ein Rotor 7 formschlüssig angeordnet ist. Der Rotor 7 der elektrischen Maschine ist als ein Blechpaket 8 mit einer Mehrzahl von in Längsrichtung 3 geschichteten Blechen 9 ausgebildet.

Weiter umfasst die elektrische Maschine einen (vorliegend nicht dargestellten) gehäusefesten Stator. Der Rotor 7 ist relativ zu dem Stator in diesem rotierbar angeordnet.

Dem Rotor 7 der elektrischen Maschine 1 ist ein Resolver-Rotor 11 eines Resolvers 13 drehfest angebunden. Der Resolver 13 dient zum Erfassen der Winkellage des Rotors 7. Der Resolver-Rotor 11 ist vorliegend in Längsrichtung 3 vom Rotor 7 beabstandet an diesem angebunden. Hierzu ist ein Adapter 15 in Form eines Steges eingesetzt, der den Resolver-Rotor 11 und den Rotors 7 der elektrischen Maschine 1 drehfest aneinander befestigt.

Durch diese Anordnung des Resolver-Rotors 11 am Rotor 7 der elektrischen Maschine 1 - und nicht wie ansonsten üblich auf der Welle 5 - sind die beiden Bauteile 7, 11 nicht relativ zueinander bewegbar. Die Position des Rotors 7 der elektrischen Maschine 1 ist mit der Position des Resolver-Rotors 11 gekoppelt.

So kann auch bei einer Winkelverdrehung des Rotors 7 auf der Welle 5 die Positionsbestimmung des Rotors 7 korrekt erfolgen. Kleine Winkelabweichungen durch reduzierte Passungen und Konturen zur Ausbildung formschlüssiger Verbindungen werden entsprechend ausgeglichen.

Der Resolver 13 umfasst ebenfalls einen Resolver-Stator 17, der vorliegend am Gehäuse 19 der elektrischen Maschine 1 angeordnet ist. Weiter ist der Resolver-Stator 17 ortsfest bezüglich des Stators der elektrischen Maschine 1 angeordnet.

In FIG 2 ist der Rotor 7 der elektrischen Maschine 1 in einem Querschnitt gezeigt. Der Rotor 7 besteht aus einer Vielzahl von geschichteten Blechen 9, die miteinander zu dem Blechpaket 8 verbunden sind. Der Rotor 7 weist eine Aufnahme 19 auf, über welche er mit der Welle 5 verbunden wird. Die Welle 5 wird hierzu in die Aufnahme 19 des Rotors 7 geschoben, bzw. der Rotor 7 auf den Außenumfang der Welle 5 aufgepresst.

Dank der im verbauten Zustand drehfesten Anordnung des Resolver-Rotors 11 am Rotor 7 der elektrischen Maschine 1 wird auch bei einer Verdrehung des Rotors 7 auf der Welle 5 dessen Position sicher ermittelt. Die Verdrehung des Rotors ist reversibel abhängig vom Betrieb der elektrischen Maschine 1.

## Patentansprüche

1. Elektrische Maschine (1), umfassend eine rotierbare, sich in einer Längsrichtung (3) erstreckende Welle (5), einen auf der Welle (5) drehfest angeordneten Rotor (7), sowie einen Resolver (13), der zum Erfassen der Winkellage des Rotors (7) einen Resolver-Rotor (11) und einen Resolver-Stator (17) umfasst, wobei der Resolver-Rotor (11) dem auf der Welle (5) angeordneten Rotor (7) drehfest angebunden ist,
**dadurch gekennzeichnet, dass** der Resolver-Rotor (11) in Längsrichtung (3) vom Rotor (7) beabstandet an diesem Rotor (7) mittels eines Adapters (15) in Form von parallel zur Längsrichtung der Welle (5) ausgerichteten Stegen angebunden ist.

2. Elektrische Maschine (1) nach Anspruch 1, wobei der Resolver-Stator (17) gehäusefest ist.

3. Elektrische Maschine (1) nach Anspruch 1 oder 2, umfassend einen gehäusefesten Stator, wobei der Rotor (7) relativ zu dem Stator rotierbar ist.

4. Elektrische Maschine (1) nach Anspruch 3, wobei der Resolver-Stator (17) ortsfest bezüglich des Stators angeordnet ist.

5. Elektrische Maschine (1) nach einem der vorhergehenden Ansprüche, deren Rotor (7) als ein Blechpaket (8) mit einer Mehrzahl von in Längsrichtung (3) geschichteter Bleche (9) ausgebildet ist.

6. Elektrische Maschine (1) nach einem der vorhergehenden Ansprüche, wobei der Rotor (7) und die Welle (5) formschlüssig miteinander verbunden sind.

7. Elektrische Maschine (1) nach einem der vorhergehenden Ansprüche, die als ein Elektromotor ausgebildet ist.

## Claims

1. Electrical machine (1), comprising a rotatable shaft (5) extending in a longitudinal direction (3), a rotor (7) arranged in a rotationally fixed manner on the shaft (5), and a resolver (13) which comprises a resolver rotor (11) and a resolver stator (17) for detecting the angular position of the rotor (7), wherein the resolver rotor (11) is attached in a rotationally fixed manner to the rotor (7) arranged on the shaft (5), **characterized in that** the resolver rotor (11), at a distance from the rotor (7) in the longitudinal direction (3), is attached to this rotor (7) by means of an adapter (15) in the form of webs oriented parallel to the longitudinal direction of the shaft (5).

2. Electrical machine (1) according to Claim 1, wherein the resolver stator (17) is fixed to the housing.

3. Electrical machine (1) according to Claim 1 or 2, comprising a stator fixed to the housing, wherein the rotor (7) is rotatable relative to the stator.

4. Electrical machine (1) according to Claim 3, wherein the resolver stator (17) is arranged fixed in position with respect to the stator.

5. Electrical machine (1) according to one of the preceding claims, the rotor (7) of which is in the form of a laminated core (8) with a plurality of laminations (9) layered in the longitudinal direction (3).

6. Electrical machine (1) according to one of the preceding claims, wherein the rotor (7) and the shaft (5) are connected to one another in an interlocking manner.

7. Electrical machine (1) according to one of the preceding claims, which is in the form of an electric motor.

## Revendications

1. Machine électrique (1), comprenant un arbre (5) rotatif s'étendant dans une direction longitudinale (3), un rotor (7) disposé sur l'arbre (5) de manière verrouillée en rotation, ainsi qu'un résolveur (13) qui comprend un rotor de résolveur (11) et un stator de résolveur (17) pour détecter la position angulaire du rotor (7), dans laquelle le rotor de résolveur (11) est fixé de manière verrouillée en rotation au rotor (7) disposé sur l'arbre (5),
**caractérisée en ce que** le rotor de résolveur (11) est espacé du rotor (7) dans la direction longitudinale (3) en étant fixé audit rotor (7) au moyen d'un adaptateur (15) sous la forme d'entretoises alignées en parallèle à la direction longitudinale de l'arbre (5).

2. Machine électrique (1) selon la revendication 1, dans laquelle le stator de résolveur (17) est solidaire du carter.

3. Machine électrique (1) selon la revendication 1 ou 2, comprenant un stator solidaire du carter, le rotor (7) pouvant tourner par rapport au stator.

4. Machine électrique (1) selon la revendication 3, dans laquelle le stator de résolveur (17) est disposé de manière stationnaire par rapport au stator.

5. Machine électrique (1) selon l'une quelconque des revendications précédentes, dont le rotor (7) est réalisé sous la forme d'un empilement de tôles (8) pourvu d'une pluralité de tôles (9) empilées dans la direction longitudinale.

6. Machine électrique (1) selon l'une quelconque des revendications précédentes, dans laquelle le rotor (7) et l'arbre (5) sont raccordés l'un à l'autre par complémentarité de forme.

7. Machine électrique (1) selon l'une quelconque des revendications précédentes qui est réalisée sous forme de moteur électrique.
